# EUROPÄISCHE PATENTSCHRIFT

(11) **EP 4 203 299 B1**
(45) Veröffentlichungstag und Bekanntmachung des Hinweises auf die Patenterteilung: **19.02.2025**
(21) Anmeldenummer: 22194228.7
(22) Anmeldetag: 06.09.2022
(51) Int. Cl.: H02S 20/10, F24S 25/12

(54) **TRÄGERSYSTEM ZUR ANORDNUNG EINER PHOTOVOLTAIKEINHEIT**
SUPPORT SYSTEM FOR ARRANGING A PHOTOVOLTAIC UNIT
SYSTÈME SUPPORT DESTINÉ À L'AGENCEMENT D'UNE UNITÉ PHOTOVOLTAÏQUE

(30) Priorität: 23.12.2021 WO PCT/DE2021/101024
(43) Veröffentlichungstag der Anmeldung: 28.06.2023
(73) Patentinhaber: Jurchen Technology GmbH, 97264 Helmstadt (DE)
(72) Erfinder: Jurchen, Michael, 97265 Hettstadt (DE); Kuran, Tim, 97872 Kreuzwertheim (DE); Scholler, Michael, 97318 Kitzingen (DE)
(74) Vertreter: Pfeffer, Michael

(56) Entgegenhaltungen:
- WO-A1-2015/110254
- DE-B3- 102011 116 926

## Beschreibung

Die Erfindung betrifft ein Trägersystem zur Anordnung einer Photovoltaikeinheit gemäß dem Oberbegriff des Patentanspruchs 1.

Aus dem Stand der Technik ist ein Trägersystem zur Anordnung einer Photovoltaikeinheit bekannt. Die Photovoltaikeinheit umfasst mehrere Photovoltaikmodule, wobei das Trägersystem mehrere Trägerelemente umfasst, die beabstandet zueinander angeordnet sind und kraftschlüssig mit einer Bodenoberfläche verbunden sind. Die Trägerelemente weisen jeweils ein Lagerelement zur Lagerung von Photovoltaikmodulen auf, wobei das jeweilige Lagerelement mindestens einen ersten Lagerabschnitt zur Lagerung mindestens eines ersten Photovoltaikmoduls und einen zweiten Lagerabschnitt zur Lagerung mindestens eines weiteren Photovoltaikmoduls aufweist. Dabei umfasst der erste Lagerabschnitt und der zweite Lagerabschnitt jeweils ein Anschlagselement und jeweils einen Befestigungsabschnitt. Das Anschlagselement und der Befestigungsabschnitt werden bei der Herstellung des Lagerelements geformt und können hinsichtlich ihrer Position auf dem Lagerelement nachträglich nicht mehr verändert werden, weil diese einteilig und einstückig mit dem Lagerelement ausgebildet sind. Verändert sich die geometrische Form, insbesondere die Abmaße des Photovoltaikmoduls, so muss zwangsweise auch das Lagerelement verändert werden. Infolgedessen vergrößert sich die Anzahl der Varianten für das Lagerelement und folglich erhöhen sich dessen Herstellungskosten, weil die Werkzeuge zur Herstellung der Lagerelemente, insbesondere der Befestigungsabschnitte und der Anschlagselemente explizit für jede Photovoltaikmodulvariante angepasst werden müssen.

Aus dem Stand der Technik ist die WO 2015/110254 A1 bekannt, welche eine Standfußeinheit zum Stabilisieren von Solarpaneelen auf einem Flachdach offenbart, wobei die Standfußeinheit Aufbiegezungen zum Abstützen der Solarpaneele umfasst.

Daher ist es die Aufgabe der Erfindung, ein Lagerelement bereitzustellen, welches einen einfachen konstruktiven Aufbau aufweist und unabhängig von den geometrischen Abmaßen des Photovoltaikmoduls universell einsetzbar ist.

Die Aufgabe wird gelöst durch den Patentanspruch 1, insbesondere durch den kennzeichnenden Teil des Patentanspruchs 1. Dabei ist ein Trägersystem zur Anordnung einer Photovoltaikeinheit vorgesehen, wobei das Trägersystem mindestens zwei Photovoltaikmodule und mindestens zwei Trägerelemente umfasst, die beabstandet zueinander angeordnet sind und kraftschlüssig und/oder formschlüssig mit einer Bodenoberfläche verbunden sind, wobei die Trägerelemente jeweils ein Lagerelement zur Lagerung mindestens eines der Photovoltaikmodule aufweisen, wobei das jeweilige Lagerelement mindestens einen ersten Lagerabschnitt zur Lagerung mindestens des ersten Photovoltaikmoduls und/oder einen zweiten Lagerabschnitt zur Lagerung mindestens eines weiteren Photovoltaikmoduls aufweist, wobei der erste Lagerabschnitt und/oder der zweite Lagerabschnitt jeweils mindestens ein Anschlagselement und jeweils mindestens einen Befestigungsabschnitt umfassen, wobei mindestens ein Adapterelement vorgesehen ist, welches mit dem jeweiligen Befestigungsabschnitt verbunden ist, wobei das jeweilige Photovoltaikmodul, insbesondere ein Rahmenabschnitt des jeweiligen Photovoltaikmoduls zwischen mindestens einem Anschlagselement und mindestens einem Adapterelement angeordnet ist. Die Aufgabe wird insbesondere dadurch gelöst, dass das jeweilige Lagerelement einen Basisabschnitt aufweist, der an dem ersten Lagerabschnitt und/oder zweiten Lagerabschnitt angrenzt, wobei der Basisabschnitt einen Basisbefestigungsabschnitt aufweist, welcher zur Anordnung des Trägerelements ausgebildet ist. Da im Bereich des Basisabschnitts kein Adapterelement angeordnet werden sollte, kann ein Werker ohne großen Aufwand das Trägerelement am Befestigungsabschnitt schnell und sicher befestigen. Der Basisbefestigungsabschnitt kann beispielsweise als Loch ausgebildet sein und/oder ein Gewinde aufweisen. Das daran zu befestigende Trägerelement könnt dann ebenfalls mit einem Gewinde versehen werden, so dass dieses mit dem Basisbefestigungsabschnitt verbunden, insbesondere verschraubt werden kann. Des Weiteren kann durch diese Lösung das Lagerelement unabhängig von der Größe, insbesondere von den Abmaßen, wie Höhe, Breite und Länge des Photovoltaikmoduls verwendet werden. Es reicht aus, das entsprechende Adapterelement auszuwählen, welches für eine zuverlässige Lagerung des Photovoltaikmoduls ausgebildet ist. Es kann somit in vorteilhafterweise auf konstruktive Veränderung des Lagerelements verzichtet werden. Folglich kann das Lagerelement einen sehr einfachen und kostengünstigen konstruktiven Aufbau aufweisen. Es kann vorzugsweise nur ein Werkzeug bereitgestellt werden, welches zur Herstellung des Lagerelements ausgebildet ist. Infolgedessen wird die Variantenvielfalt der Lagerelemente deutlich verringert und es kann beispielsweise ein universelles Lagerelement hergestellt werden, welches für eine Vielzahl von unterschiedlichen Photovoltaikmodulen verwendet werden kann. Bedingt dadurch, können somit auch die Lagerkosten gesenkt werden, weil die Anzahl der Varianten des Lagerelements reduziert werden können und insbesondere im Extremfall nur eine Variante des Lagerelements benötigt wird. Des Weiteren wird auch eine Überproduktion der Lagerelemente verhindert, weil die Anzahl der Varianten des Lagerelements verringert wird. Demzufolge wird auch der CO2-Ausstoss, welcher bei einer Überproduktion entsteht, deutlich verringert. Ein weiterer Vorteil liegt darin begründet, dass Lieferzeiten verkürzt werden können. Wenn sich die Abmaße des Photovoltaikmoduls verändern, kann das Lagerelement, welches vorzugsweise universell einsetzbar ist, verwendet werden. Je nach konstruktiver Ausgestaltung des Adapterelements kann dieses sogar unverändert übernommen werden. Falls das Adapterelement konstruktiv angepasst werden müsste, dann ist dies einfacher im Vergleich zum Lagerelement, weil das Adapterelement einen einfacheren konstruktiven und kompakten Aufbau aufweisen kann. Des Weiteren kann durch das Adapterelement das Photovoltaikmodul zuverlässig und sicher auf dem Lagerelement gelagert werden, insbesondere eingelegt werden. Anschließend kann das Photovoltaikmodul fest mit dem Lagerelement verbunden werden, ohne dass dieses verrutschen kann. So kann das Adapterelement auch als Positionierelement, insbesondere als Positionierhilfe ausgebildet sein. Dadurch kann die Montage für einen Werker deutlich vereinfacht werden. Im Ergebnis kann mit Hilfe des Adapterelements der Abstand zwischen dem Anschlagselement und dem Befestigungsabschnitt angepasst werden, insbesondere verringert werden. Der Abstand zwischen dem Anschlagselement und dem Befestigungsabschnitt sollte mindestens so groß ausgebildet sein, wie die maximale Breite des Photovoltaikmoduls, insbesondere des Rahmenabschnitts, welches für das Trägersystem bereitgestellt werden kann. Somit könnte in vorteilhafterweise für jedes bekannte Photovoltaikmodul ein einziges universelles Lagerelement bereitgestellt werden. Des Weiteren kann jeder Befestigungsabschnitt mindestens ein Befestigungselement umfassen. Der Befestigungsabschnitt kann daher als Befestigungselement ausgebildet sein.

Vorzugsweise kann das Trägerelement zumindest teilweise oder vollständig innerhalb eines Bodens und/oder zumindest teilweise oder vollständig unterhalb der Bodenoberfläche angeordnet sein. Vorzugsweise kann das Bodenoberflächenbefestigungselement zumindest teilweise oder vollständig innerhalb eines Bodens und/oder zumindest teilweise oder vollständig unterhalb der Bodenoberfläche angeordnet sein. Der Boden kann dann beispielsweise als Erdreich ausgebildet sein. Nach einer bevorzugten Ausführung des Trägersystems kann vorgesehen sein, dass das Adapterelement genau einen oder mindestens zwei Verbindungsabschnitte aufweist, die kraftschlüssig und/oder formschlüssig und/oder stoffschlüssig jeweils mit mindestens einem Befestigungsabschnitt des Lagerelements verbunden ist/sind. Wenn das Adapterelement genau einen Verbindungsabschnitt aufweist, kann die Montage des Adapterelements für den Werker vereinfacht werden, weil es nur eine mögliche Verbindung zwischen dem genau einen Verbindungsabschnitt und dem jeweiligen Befestigungsabschnitt gibt. Wenn das Adapterelement mindestens zwei Verbindungsabschnitte aufweist, ist auch das Adapterelement variabel einsetzbar. Dadurch kann die Anzahl der Varianten für das Adapterelement reduziert werden, weil je nach Abmaße des entsprechenden Photovoltaikmoduls, insbesondere des Rahmenabschnitts das Adapterelement versetzbar auf dem Befestigungsabschnitt positionierbar ist. Je höher die Anzahl der Verbindungsabschnitte des Adapterelements ausgebildet ist, desto mehr unterschiedliche Varianten von Photovoltaikmodulen können mit dem Adapterelement auf dem Lagerelement eingelegt und/oder gelagert werden.

Nach einer weiteren bevorzugten Ausführung des Trägerelements kann vorgesehen sein, dass das Adapterelement mindestens zwei, vorzugsweise drei, Verbindungsabschnitte umfasst, wobei mindestens ein Verbindungsabschnitt mit einem Befestigungsabschnitt verbunden ist und mindestens ein anderer Verbindungsabschnitt unbesetzt ist. Mit Hilfe dieser vorteilhaften Ausgestaltung des Adapterelements kann die Variantenvielfalt desselben verringert werden. Des Weiteren kann aufgrund des entnommenen Materials des Adapterelements zur Herstellung und Ausbildung der Verbindungsabschnitte das Gewicht der Adapterelemente verringert werden. Infolgedessen kann beim Transport der Adapterelemente aus der Herstellungsstätte zum Montageort oder Lagerort weniger Gewicht transportiert werden. Somit kann auch der CO2-Ausstoss reduziert werden, welcher beim Transport der Adapterelemente entsteht.

Das Adapterelement kann sicher und zuverlässig mit dem Lagerelement verbunden werden, wenn der jeweilige Befestigungsabschnitt als Befestigungsrastelement oder Befestigungsgegenrastelement ausgebildet ist und/oder der jeweilige Verbindungsabschnitt als Verbindungsrastelement oder Verbindungsgegenrastelement ausgebildet ist, wobei das Befestigungsrastelement mit dem Verbindungsgegenrastelement und/oder das Befestigungsgegenrastelement mit dem Verbindungsrastelement kraftschlüssig und/oder formschlüssig im Eingriff ist. Durch diese Maßnahme kann gewährleistet werden, dass das Adapterelement auch bei stürmischen Witterungsverhältnissen auf dem Lagerelement angeordnet bleibt.

Die Herstellung des Adapterelements und/oder des Lagerelements kann sehr kostengünstig und einfach realisiert werden, wenn der Verbindungsabschnitt des jeweiligen Adapterelements als Loch oder Ausnehmung ausgebildet ist und der jeweilige Befestigungsabschnitt des Lagerelements als Vorsprung ausgebildet ist, wobei zur Befestigung des Adapterelements mit dem Lagerelement der Vorsprung innerhalb des Lochs oder der Ausnehmung angeordnet ist. Das Loch kann beispielsweise zentriert auf einer Oberfläche des Adapterelements angeordnet sein.

Nach einer weiteren bevorzugten Ausführung des Trägerelements kann vorgesehen sein, dass das Adapterelement eine als Verbindungsabschnitt ausgebildete Nase aufweist, welche mit einem als Befestigungsabschnitt ausgebildeten Lagerloch kraftschlüssig und/oder formschlüssig verbunden ist. Mit Hilfe der Nase kann ein Werker das Adapterelement einfach und sicher mit dem Trägerelement verbinden. Die Nase kann dabei beispielsweise als Rastnase mit einem Widerhaken ausgebildet sein. Somit kann ein nachträgliches Lösen des Adapterelements nur mit einer Zerstörung desselben erfolgen. Dazu könnte die Rastnase eine Sollbruchstelle aufweisen. Diese Sollbruchstelle könnte bei einer vorbestimmten Krafteinwirkung brechen und das Adapterelement kann einfach und sicher aus dem Lagerelement demontiert werden. Alternativ kann die Nase, insbesondere die Rastnase auch flexibel ausgebildet sein, so dass sich diese bewegen lässt, um das Adapterelement zerstörungsfrei von dem Lagerelement demontieren zu können.

Im Allgemeinen kann die Verbindung des Befestigungsabschnitts mit dem Verbindungsabschnitt beispielsweise als formschlüssige Steckverbindung ausgebildet sein, Die Verbindung des Befestigungsabschnitts mit dem Verbindungsabschnitt kann alternativ beispielsweise als kraftschlüssige und formschlüssige Steckverbindung ausgebildet sein welche vorzugsweis eine Presspassung aufweist.

Nach einer weiteren bevorzugten Ausführung des Trägerelements kann vorgesehen sein, dass das Adapterelement als Arretierungselement für mindestens ein Photovoltaikmodul ausgebildet ist, wobei das Adapterelement zur Befestigung des mindestens einen Photovoltaikmoduls bewegbar, insbesondere verdrehbar auf dem Lagerelement, insbesondere auf dem Befestigungsabschnitt ausgebildet ist. Diese Lösung weist den Vorteil auf, dass man auf ein Klemmelement zur Befestigung des mindestens einen Photovoltaikmoduls verzichten könnte. Das Adapterelement hätte somit zwei Funktionen. Zum einem könnte es für die zuverlässige Lagerung des Photovoltaikmoduls auf dem Lagerelement dienen, und zum anderen sorgt es zur Befestigung des Photovoltaikmoduls auf dem Lagerelement. Zumindest kann das als Adapterelement ausgebildete Arretierungselement für eine Vormontage des Photovoltaikmoduls auf dem Lagerelement dienen, um dann nachträglich mit einem Klemmelement das Photovoltaikmodul mit dem Lagerelement zu verbinden. Ein Verrutschen des Photovoltaikmoduls während der Montage desselben kann somit in vorteilhafterweise verhindert werden.

Einen sehr einfachen und kostengünstigen konstruktiven Aufbau kann das Adapterelement aufweisen, wenn das Adapterelement als vorzugsweise quaderförmige Platte ausgebildet ist oder vorzugsweise als kreisförmige oder rundförmige Scheibe ausgebildet ist. Bei dieser Ausgestaltung der Adapterelemente können diese mit Hilfe von einfachen Werkzeugen hergestellt werden. Aufgrund dieser einfachen konstruktiven Ausgestaltung des Adapterelements kann dieses kostengünstig als Massenware hergestellt werden.

Es kann weiter vorgesehen sein, dass das jeweilige Anschlagselement als Haltenase ausgebildet ist, welche aus dem jeweiligen Lagerabschnitt des Lagerelements hervorsteht. Die Haltenasen können in vorteilhafterweise bereits bei der Herstellung des Lagerelements geformt werden, so dass kein weiterer Herstellungsschritt mehr erforderlich ist.

Die Montage des Adapterelements auf das Lagerelement kann durch einen Werker einfach durchgeführt werden, wenn der jeweilige Verbindungsabschnitt des Adapterelements als Schlitz ausgebildet ist und auf einen Randabschnitt des Lagerelements seitlich aufschiebbar ausgebildet ist, wobei nach der Montage des Adapterelements mit dem Lagerelement der Schlitz kraftschlüssig und/oder formschlüssig mit dem Randabschnitt im Eingriff ist. Dabei sollte vorgesehen werden, dass die Größe, insbesondere die Breite des Schlitzes kleiner als die Breite des Randabschnitts des Lagerelements ausgebildet ist, um vorzugsweise im Sinne einer Presspassung eine sichere Lagerung des Adapterelements an dem Lagerelement zu gewährleisten. Wenn die Breite des Schlitzes größer als die Breite des Randabschnitts des Lagerelements ausgebildet ist, so kann innerhalb des Lagerelements ein Einlegeelement angeordnet werden, um den Schlitz zu verkleinern, so dass dieser dann eine kleinere Breite aufweist als die Breite des Randabschnitts des Lagerelements. Dieses Einlegeelement kann als Matte ausgebildet sein, welche vorzugsweise aus einem flexiblen Material, wie beispielsweise Gummi oder Schaumstoff ausgebildet ist.

Nach einer weiteren bevorzugten Ausführung des Trägersystems kann vorgesehen sein, dass das jeweilige Trägerelement mit mindestens einem Bodenoberflächenbefestigungselement verbunden ist, wobei das Bodenoberflächenbefestigungselement mit der zur Anordnung des Trägersystems vorgesehenen Bodenoberfläche kraftschlüssig und/oder formschlüssig verbunden ist.

Die bevorzugt als Stäbe ausgebildeten Trägerelemente können das vorzugsweise als Teller ausgebildete Bodenoberflächenbefestigungselement umfassen, welches sich vorzugsweise auf der Bodenoberfläche abstützt. Dadurch wird verhindert, dass das Trägersystem, insbesondere die Trägerelemente beispielsweise aufgrund des Eigengewichts der Photovoltaikmodule im Boden versinken.

Die Energieerzeugung durch die Photovoltaikmodule kann erheblich gesteigert werden, wenn das Trägersystem mindestens ein erstes und ein zweites Trägerelement umfasst, wobei der Abstand des Lagerelements des ersten Trägerelements zu der Bodenoberfläche länger ausgebildet ist, als der Abstand des Lagerelements des zweiten Trägerelements zu der Bodenoberfläche, wobei der erste Lagerabschnitt und der zweite Lagerabschnitt des Lagerelements des ersten Trägerelements in einem Winkel alpha1 von größer oder gleich 180 Grad zueinander angeordnet sind und der erste Lagerabschnitt und der zweite Lagerabschnitt des Lagerelements des zweiten Trägerelements in einem Winkel alpha2 von kleiner gleich 180 Grad zueinander angeordnet sind.

Die Anzahl der Adapterelemente des Trägersystems kann verringert werden, wenn mindestens ein Adapterelement mindestens zwei Verbindungsabschnitte umfasst, wobei mindestens der erste Verbindungsabschnitt mit dem ersten Befestigungsabschnitt des jeweiligen Lagerelements, insbesondere ersten Lagerabschnitts oder zweiten Lagerabschnitts und mindestens der zweite Verbindungsabschnitt mit dem zweiten Befestigungsabschnitt desselben Lagerelements, insbesondere desselben ersten Lagerabschnitts oder desselben zweiten Lagerabschnitts verbunden ist. Dabei kann das Adapterelement sich von dem ersten Lagerabschnitt über den Basisabschnitt zum zweiten Lagerabschnitt erstrecken. Dabei sollte das Adapterelement beabstandet zu dem Basisbefestigungsabschnitt angeordnet sein. Somit kann weiterhin das Trägerelement sicher und zuverlässig mit dem Basisbefestigungsabschnitt verbunden werden.

Das Photovoltaikmodul kann noch zuverlässiger und sicherer mit dem Lagerelement verbunden werden, wenn auf dem ersten Lagerabschnitt und dem zweiten Lagerabschnitt jeweils ein Klemmbefestigungsabschnitt zur Anordnung eines Klemmelements vorgesehen ist, welches jeweils mindestens zwei Photovoltaikmodule kraftschlüssig und/oder formschlüssig und/oder stoffschlüssig miteinander verbindet. Das Klemmelement kann beispielsweise als Steckelement ausgebildet sein.

Das Adapterelement kann kostengünstig hergestellt werden, wenn das Adapterelement aus Kunststoff oder aus Metall, insbesondere aus Edelstahl oder galvanisierten Stahl oder aus feuerverzinkten Stahl ausgebildet ist. Ferner ist das Adapterelement bei dieser Auswahl der Werkstoffe witterungsfest und weist somit eine lange Lebensdauer auf.

Sehr kompakt kann das Adapterelement ausgebildet sein, wenn das Adapterelement eine Höhe h von 2mm bis 30mm aufweist. Wenn die Photovoltaikmodule des Trägersystems unterschiedliche Abmaße aufweisen, kann es von Vorteil sein, wenn die für das Trägersystem vorgesehenen Adapterelemente unterschiedlich groß ausgebildet sind und eine unterschiedliche Form aufweisen.

Um das Photovoltaikmodul vor Beschädigungen zu schützen und dies zugleich sicher auf dem Lagerelement zu lagern, kann vorgesehen sein, dass das jeweilige Photovoltaikmodul, insbesondere der Rahmenabschnitt des jeweiligen Photovoltaikmoduls kraftschlüssig und/oder formschlüssig und/oder stoffschlüssig zwischen mindestens einem Anschlagselement und mindestens einem Adapterelement angeordnet ist.

Die einzelnen Bauteile, insbesondere das Adapterelement und/oder der Befestigungsabschnitt, vorzugsweise das mindestens eine Befestigungselement und/oder das Anschlagselement weisen Bauteiltoleranzen auf, die eine Toleranzkette bilden können. Daher kann zwischen dem Photovoltaikmodul, insbesondere dem Rahmenabschnitt und dem Befestigungsabschnitt und/oder dem Photovoltaikmodul, insbesondere dem Rahmenabschnitt und dem Anschlagselement und/oder dem Photovoltaikmodul, insbesondere dem Rahmenabschnitt und/oder dem Adapterelement ein Spiel angeordnet sein. Wenn das Adapterelement als quaderförmige Platte ausgebildet ist, kann das Spiel zwischen dem Photovoltaikmodul, insbesondere dem Rahmenabschnitt, vorzugsweise dem Rahmenelement und/oder eine Längsseite der quaderförmigen Platte und/oder an einer Querseite der quaderförmigen Platte angeordnet sein. Das oben beschriebene Spiel zwischen den einzelnen oben genannten Bauteilen kann bei wechselnden Außentemperaturen sehr vorteilhaft sein, weil die Temperaturschwankungen zu geometrischen Veränderungen der oben genannten Bauteile führen kann. Somit kann in vorteilhafterweise verhindert werden, das ungewollte Spannungen auf die Photovoltaikmodule einwirken, welche diese beschädigen könnten.

Der Rahmenabschnitt umfasst einen vorzugsweise um das Photovoltaikmodul umlaufenden Rahmen, welcher aus Kunststoff oder Metall ausgebildet sein kann. Insbesondere dann, wenn das Adapterelement aus Metall oder aus Hartkunststoff ausgebildet ist, schützt der Rahmen das Photovoltaikmodul, wenn das Adapterelement eine Kraft auf dieses ausübt, welche beispielsweise beim Arretieren oder Anordnen des Adapterelements oder bei der Verwendung des Klemmelements auf das Photovoltaikmodul ausgeübt wird.

Die Erfindung sowie das technische Umfeld werden nachfolgend anhand der Figuren näher erläutert. Es ist darauf hinzuweisen, dass die Figuren besonders bevorzugte Ausführungsbeispiele der Erfindung zeigen, die Erfindung jedoch nicht darauf beschränkt ist.

Die Figuren zeigen:
- Figur 1: ein Trägersystem zur Anordnung einer Photovoltaikeinheit aufweisend mehrere Photovoltaikmodule in einer Seitenansicht,
- Figur 2: einen Ausschnitt des Trägersystems zu Anordnung der Photovoltaikeinheit aufweisend vier Photovoltaikmodule in einer perspektivischen Ansicht,
- Figur 3: ein Lagerelement des Trägersystems mit Adapterelementen gemäß einer ersten Ausführungsform in einer perspektivischen Ansicht, wobei das Lagerelement mit einem Trägerelement verbunden ist.
- Figur 4: das Lagerelement des Trägersystems mit Adapterelementen gemäß einer zweiten Ausführungsform in einer perspektivischen Ansicht, wobei das Lagerelement mit einem Trägerelement verbunden ist und
- Figur 5: das Lagerelement des Trägersystems mit dem Adapterelement gemäß der ersten Ausführungsform und mit dem Adapterelement gemäß der zweiten Ausführungsform, wobei das Lagerelement mit einem Trägerelement verbunden ist.

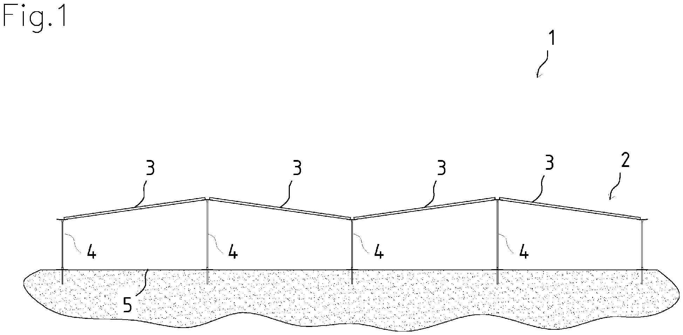

In der Figur 1 ist ein erfindungsgemäßes Trägersystem 1 mit einer Photovoltaikeinheit 2 visualisiert, welche mehrere Photovoltaikmodule 3 aufweist. Das Trägersystem 1 umfasst mehrere vorzugsweise als Stäbe ausgebildete Trägerelemente 4, die beabstandet zueinander angeordnet sind und kraftschlüssig und/oder formschlüssig mit einer Bodenoberfläche 5 verbunden sind.

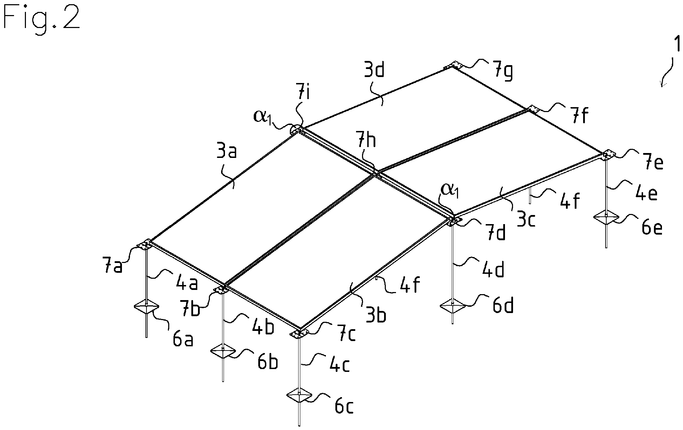

In der Figur 2 ist ein Ausschnitt des Trägersystem 1 näher gezeigt, wobei anhand dieser Figur 2 der konstruktive Aufbau des Trägersystems 1 näher verdeutlicht wird. Das Trägersystem 1 umfasst hier vier Photovoltaikmodule 3a-3d. Die neun Trägerelemente 4 weisen jeweils einen vorzugsweise als Teller ausgebildetes Bodenoberflächenbefestigungselement 6 auf, welches sich vorzugsweise auf der Bodenoberfläche 5 abstützt (siehe Figur 1). In der Figur 2 umfasst das Trägersystem 1 neun Bodenoberflächenbefestigungselement 6, von denen fünf Bodenoberflächenbefestigungselement 6a-6e in der Figur 2 zu erkennen sind, wobei das jeweilige Trägerelement 4 mit mindestens einem Bodenoberflächenbefestigungselement 6 kraftschlüssig und/oder formschlüssig und/oder stoffschlüssig verbunden ist, wobei das jeweilige Bodenoberflächenbefestigungselement 6 mit der zur Anordnung des Trägersystems 1 vorgesehenen Bodenoberfläche 5 kraftschlüssig und/oder formschlüssig verbunden ist. Die Bodenoberfläche 5 ist in der Figur 2 nicht näher dargestellt, wobei die Bodenoberflächenbefestigungselemente 6 entweder auf der Bodenoberfläche 5 aufliegen oder von dieser 5 zumindest teilweise umschlossen sind. Vorzugsweise ist jedem Trägerelement 4 genau ein einziges Bodenoberflächenbefestigungselement 6 zugeordnet. Ferner umfasst das Trägersystem 1 in der Figur 2 neun Trägerelemente 4, von denen sieben Trägerelemente 4a-4f zu erkennen sind. Jedem der neun Trägerelemente 4 ist jeweils ein Lagerelement 7 zur Lagerung der Photovoltaikmodule 3a-3d zugeordnet. Im vorliegenden Ausführungsbeispiel ist beispielsweise der Abstand des Lagerelements 7d des Trägerelements 4d zu der Bodenoberfläche 5 länger ausgebildet, als der Abstand des Lagerelements 7c bzw. 7e des Trägerelements 4c bzw. 4e zu der in der Figur 2 nicht näher gezeigten Bodenoberfläche 5. Diese Anordnung kann auch analog zu den anderen Trägerelementen 4 und Lagerelementen 7 des Trägersystems 1 ausgebildet sein, so dass man beispielsweise eine wellenförmige Anordnung der Photovoltaikmodule 3 erzielt, wie diese bei dem Trägersystem 1 in der Seitenansicht der Figur 1 zu erkennen ist.

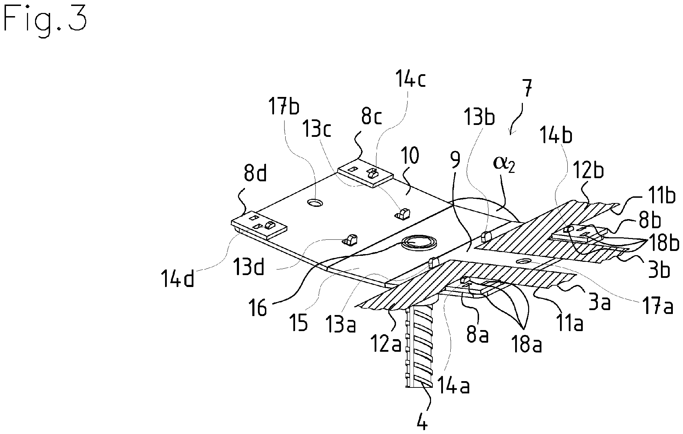

In der Figur 3 ist ein Lagerelement 7 gezeigt, bei welchem Adapterelemente 8a-8d gemäß einer ersten Ausführungsform angeordnet sind.

In der Figur 3 ist folglich ein Lagerelement 7 visualisiert, welches beispielsweise bei dem Trägersystem 1 angeordnet werden kann, wie es in den Figuren 1 und 2 gezeigt ist. Das Lagerelement 7 weist einen ersten Lagerabschnitt 9 beispielsweise zur Lagerung des ersten Photovoltaikmoduls 3a und des zweiten Photovoltaikmoduls 3b auf und weist weiter einen zweiten Lagerabschnitt 10 zur Lagerung des dritten Photovoltaikmoduls und vierten Photovoltaikmoduls auf, welche in der Figur 3 nicht näher gezeigt sind. Das jeweilige Photovoltaikmodul, insbesondere hier die Photovoltaikmodule 3a, 3b sind jeweils mit einem Rahmenelement 11a, 11b ausgebildet, welches jeweils einen Rahmenabschnitt 12a, 12b umfasst. Im vorliegenden Ausführungsbeispiel umfassen der erste Lagerabschnitt 9 und der zweite Lagerabschnitt 10 jeweils zwei Anschlagselemente 13a, 13b bzw. 13c, 13d und jeweils vier Befestigungsabschnitte 14a, 14b bzw. 14c, 14d. Das jeweilige Anschlagselement 13a, 13b, 13c, 13d kann beispielsweise als Haltenase ausgebildet sein, welche jeweils aus dem jeweiligen Lagerabschnitt 9, 10 des Lagerelements 7 hervorsteht. Des Weiteren kann jeder Befestigungsabschnitt 14a, 14b bzw. 14c, 14d mindestens ein Befestigungselement umfassen.

Der in den Figuren 3 bis 5 gezeigte erste Lagerabschnitt 9 und der zweite Lagerabschnitt 10 des Lagerelements 7 des hier vorliegenden Trägerelements 4 sind in einem Winkel alpha2 von kleiner gleich 180 Grad zueinander angeordnet. Dies entspricht beispielsweise den in der Figur 2 dargestellten Lagerelementen 7a, 7b, 7c, 7e, 7f, 7g. Der erste Lagerabschnitt 9 und der zweite Lagerabschnitt 10 der Lagerelemente 7d, 7h, 7i (Figur 2) sind in einem Winkel alpha1 von größer oder gleich 180 Grad zueinander angeordnet.

Ferner weist das Lagerelement 7 einen Basisabschnitt 15 auf, der an dem ersten Lagerabschnitt 9 und an dem zweiten Lagerabschnitt 10 angrenzt, wobei der Basisabschnitt 15 einen vorzugsweise als kreisförmiges oder rundförmiges Loch ausgebildeten Basisbefestigungsabschnitt 16 aufweist, welcher zur Anordnung des Trägerelements 4 ausgebildet ist. Auf dem ersten Lagerabschnitt 9 und dem zweiten Lagerabschnitt 10 ist jeweils ein Klemmbefestigungsabschnitt 17a, 17b zur Anordnung eines nicht näher gezeigten Klemmelements vorgesehen, welches beispielsweise mindestens das erstes Photovoltaikmodul 3a und das zweite Photovoltaikmodul 3b kraftschlüssig und/oder formschlüssig miteinander verbindet.

In der Figur 3 sind die vier Adapterelement 8a, 8b, 8c, 8d vorgesehen, wobei das jeweilige Adapterelement 8a, 8b, 8c, 8d eine Höhe h von 2mm bis 30mm aufweist und das Adapterelement 8a, 8b, 8c, 8d als vorzugsweise quaderförmige Platte ausgebildet ist oder alternativ vorzugsweise als kreisförmige oder rundförmige Scheibe ausgebildet ist. Beispielsweise in der Figur 3 sind vereinfacht nur die zwei Photovoltaikmodule 3a, 3b gezeigt. Dabei ist das Adapterelement 8a mit dem Befestigungsabschnitt 14a und das Adapterelement 8b mit dem Befestigungsabschnitt 14b verbunden, wobei das Photovoltaikmodul 3a, insbesondere der Rahmenabschnitt 12a, vorzugsweise das Rahmenelement 11a zwischen dem Anschlagselement 13a und dem Adapterelement 8a angeordnet ist und das Photovoltaikmodul 3b, insbesondere der Rahmenabschnitt 12b, vorzugsweise das Rahmenelement 11b zwischen dem Anschlagselement 13b und dem Adapterelement 8b angeordnet ist. Das jeweilige Photovoltaikmodul 3a, 3b, insbesondere der Rahmenabschnitt 12a, 12b des jeweiligen Photovoltaikmoduls 3a, 3b kann dabei kraftschlüssig und/oder formschlüssig und/oder stoffschlüssig zwischen mindestens einem Anschlagselement 13a, 13b und mindestens einem Adapterelement 8a, 8b angeordnet sein.

Die einzelnen Bauteile, insbesondere das jeweilige Adapterelement 8a, 8b, 8c, 8d und/oder der jeweilige Befestigungsabschnitt 14a, 14b, 14c, 14d vorzugsweise das mindestens eine Befestigungselement und/oder das jeweilige Anschlagselement 13a, 13b, 13c, 13d weisen Bauteiltoleranzen auf, die eine Toleranzkette bilden können. Daher kann zwischen dem jeweiligen Rahmenabschnitt 12a, 12b und dem jeweiligen Befestigungsabschnitt 14a, 14b, und/oder dem jeweiligen Rahmenabschnitt 12a, 12b und dem jeweiligen Anschlagselement 8a, 8b und/oder dem Rahmenabschnitt 12a, 12b und/oder dem Adapterelement 8a, 8b ein Spiel angeordnet sein. Wenn das jeweilige Adapterelement 8a, 8b als quaderförmige Platte ausgebildet ist, kann das Spiel zwischen dem Rahmenabschnitt 12a, 12b, insbesondere dem Rahmenelement und/oder einer Längsseite der quaderförmigen Platte - beispielsweise in der Figur 3 die längere Seite des Adapterelements 8a - und/oder an einer Querseite der quaderförmigen Platte - beispielsweise in der Figur 3 die kürzere Seite des Adapterelements 8a - angeordnet sein. In der Figur 3 ist beispielsweise an einer Längsseite des Adapterelements 8b und dem Rahmenabschnitt 12b ein Spiel deutlich zu erkennen.

Das Adapterelement 8a bzw. 8b umfasst hier mindestens zwei Verbindungsabschnitte, vorzugsweise drei Verbindungsabschnitte 18a bzw. 18b, die kraftschlüssig und/oder formschlüssig und/oder stoffschlüssig jeweils mit mindestens einem Befestigungsabschnitt 14a bzw. 14b des Lagerelements 7 verbunden sind, wobei mindestens ein Verbindungsabschnitt 18a bzw. 18b mit einem Befestigungsabschnitt 14a bzw. 14b verbunden ist und mindestens ein anderer Verbindungsabschnitt 18a bzw. 18b, hier zwei Verbindungsabschnitte 18a bzw.18b unbesetzt sind.

Der jeweilige Verbindungsabschnitt 18a bzw. 18b des jeweiligen Adapterelements 8a bzw. 8b ist hier beispielsweise als Loch oder alternativ als Ausnehmung ausgebildet und beispielsweise der jeweilige Befestigungsabschnitt 14a bzw. 14b des Lagerelements 7 ist als Vorsprung ausgebildet, wobei zur Befestigung des Adapterelements 8a bzw. 8b mit dem Lagerelement 7 der Vorsprung innerhalb des Lochs oder alternativ der Ausnehmung angeordnet ist.

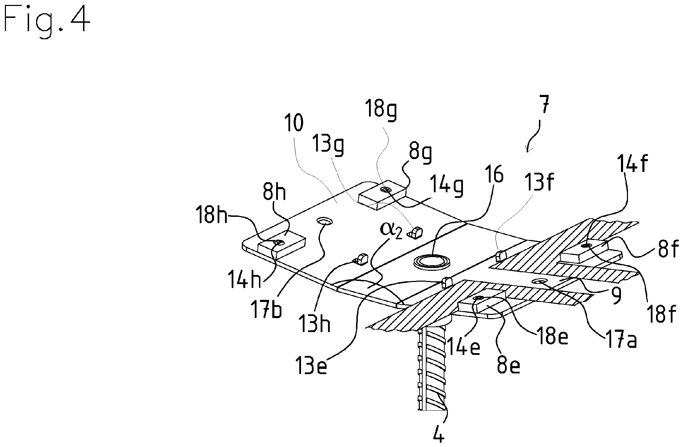

In der Figur 4 ist ein Lagerelement 7 gezeigt, bei welchem Adapterelemente 8e-8h gemäß einer zweiten Ausführungsform angeordnet sind. Dieses Ausführungsbeispiel unterscheidet sich von dem ersten Ausführungsbeispiel insbesondere dadurch, dass das jeweilige Adapterelement 8e, 8f, 8g, 8h genau einen Verbindungsabschnitt 18e, 18f, 18g, 18h aufweist, die kraftschlüssig und/oder formschlüssig und/oder stoffschlüssig jeweils mit mindestens einem Befestigungsabschnitt 14e, 14f, 14g, 14h des Lagerelements 7 verbunden ist/sind.

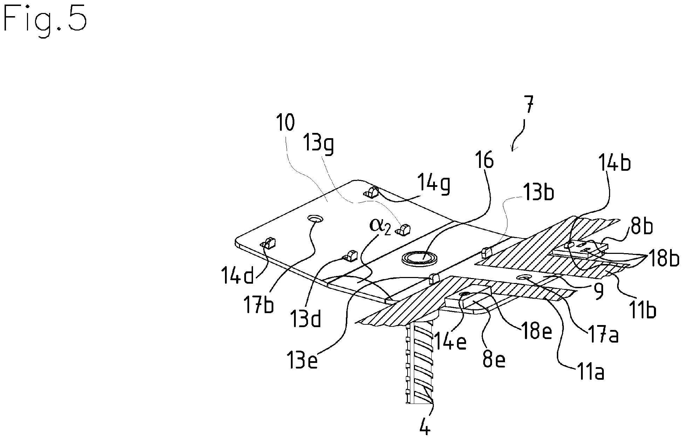

In der Figur 5 ist ein Lagerelement 7 gezeigt, bei welchem beispielsweise Adapterelemente 8b, gemäß der ersten Ausführungsform angeordnet sind und Adapterelemente 8e gemäß der zweiten Ausführungsform angeordnet sind. Dieses Ausführungsbeispiel unterscheidet sich von dem ersten und zweiten Ausführungsbeispiel insbesondere dadurch, dass die für das Trägersystem 1 vorgesehenen Adapterelemente 8b und 8e unterschiedlich groß ausgebildet sind und eine unterschiedlich Form aufweisen. So können unterschiedliche Varianten von Photovoltaikmodulen 3 auf dem Lagerelement 7angeordnet werden.

In allen hier beschriebenen Ausführungsbeispielen kann das jeweilige Adapterelement 8a-8g aus Kunststoff oder aus Metall, insbesondere aus Edelstahl oder galvanisierten Stahl oder aus feuerverzinkten Stahl ausgebildet sein.

Alternative Ausgestaltungen des Trägersystems 1 sind möglich und können mit den oben beschriebenen Ausführungsbeispielen kombiniert werden oder erweitert werden. So ist es beispielsweise denkbar, dass der jeweilige Befestigungsabschnitt 14a, 14b, 14c, 14d, 14e, 14f, 14g, 14h als Befestigungsrastelement oder Befestigungsgegenrastelement ausgebildet ist und/oder der jeweilige Verbindungsabschnitt 18a, 18b, 18c, 18d, 18e, 18f, 18g, 18h als Verbindungsrastelement oder Verbindungsgegenrastelement ausgebildet ist, wobei das Befestigungsrastelement mit dem Verbindungsgegenrastelement und/oder das Befestigungsgegenrastelement mit dem Verbindungsrastelement kraftschlüssig und/oder formschlüssig im Eingriff ist.

Es besteht auch die Möglichkeit, dass das Adapterelement 8, 8a, 8b, 8c, 8d, 8e, 8f, 8g, 8h eine als Verbindungsabschnitt 18a, 18b, 18c, 18d, 18e, 18f, 18g, 18h ausgebildete Nase aufweist, welche mit einem als Befestigungsabschnitt 14a, 14b, 14c, 14d, 14e, 14f, 14g, 14h ausgebildeten Lagerloch kraftschlüssig und/oder formschlüssig verbunden ist.

Auch kann es denkbar sein, dass das Adapterelement 8, 8a, 8b, 8c, 8d, 8e, 8f, 8g, 8h als Arretierungselement für mindestens ein Photovoltaikmodul 3, 3a, 3b, 3c, 3d ausgebildet ist, wobei das Adapterelement 8, 8a, 8b, 8c, 8d, 8e, 8f, 8g, 8h zur Befestigung des mindestens einen Photovoltaikmoduls 3, 3a, 3b, 3c, 3d bewegbar, insbesondere verdrehbar auf dem Lagerelement 7, 7a, 7b, 7c, 7d, 7e, 7f, 7g, 7h, 7i, insbesondere auf dem Befestigungsabschnitt 14a, 14b, 14c, 14d, 14e, 14f, 14g, 14h ausgebildet ist.

Eine weitere alternative oder zusätzliche Möglichkeit zur Ausgestaltung des Trägersystems 1 besteht darin, dass der jeweilige Verbindungsabschnitt 18a, 18b, 18c, 18d, 18e, 18f, 18g, 18h des Adapterelements 8, 8a, 8b, 8c, 8d, 8e, 8f, 8g, 8h als Schlitz ausgebildet ist und auf einen Randabschnitt des Lagerelements 7, 7a, 7b, 7c, 7d, 7e, 7f, 7g, 7h, 7i seitlich aufschiebbar ausgebildet ist, wobei nach der Montage des Adapterelements 8, 8a, 8b, 8c, 8d, 8e, 8f, 8g, 8h mit dem Lagerelement 7, 7a, 7b, 7c, 7d, 7e, 7f, 7g, 7h, 7i der Schlitz kraftschlüssig und/oder formschlüssig mit dem Randabschnitt im Eingriff ist.

Ferner ist es denkbar, dass mindestens ein Adapterelement 8, 8a, 8b, 8c, 8d, 8e, 8f, 8g, 8h mindestens zwei Verbindungsabschnitte 18a, 18b, 18c, 18d, 18e, 18f, 18g, 18h umfasst, wobei mindestens der erste Verbindungsabschnitt 18a, 18b, 18c, 18d, 18e, 18f, 18g, 18h mit dem ersten Befestigungsabschnitt 14a, 14b, 14c, 14d, 14e, 14f, 14g, 14h des jeweiligen Lagerelements 7, 7a, 7b, 7c, 7d, 7e, 7f, 7g, 7h, 7i, insbesondere ersten Lagerabschnitts 9 oder zweiten Lagerabschnitts 10 und mindestens der zweite Verbindungsabschnitt 18a, 18b, 18c, 18d, 18e, 18f, 18g, 18h mit dem zweiten Befestigungsabschnitt 14a, 14b, 14c, 14d, 14e, 14f, 14g, 14h desselben Lagerelements 7, 7a, 7b, 7c, 7d, 7e, 7f, 7g, 7h, 7i, insbesondere desselben ersten Lagerabschnitts 9 oder desselben zweiten Lagerabschnitts 10 verbunden ist.

### Bezugszeichenliste

- 1: Trägersystem
- 2: Photovoltaikeinheit
- 3, 3a, 3b, 3c, 3d: Photovoltaikmodul
- 4, 4a, 4b,4c, 4d, 4e, 4f: Trägerelement
- 5: Bodenoberfläche
- 6, 6a, 6b, 6c, 6d, 6e: Bodenoberflächenbefestigungselement
- 7, 7a, 7b, 7c, 7d, 7e, 7f, 7g, 7h, 7i: Lagerelement
- 8, 8a, 8b, 8c, 8d, 8e, 8f, 8g, 8h: Adapterelement
- 9: erster Lagerabschnitt
- 10: zweiter Lagerabschnitt
- 11a, 11b: Rahmenelement
- 12a, 12b: Rahmenabschnitt
- 13a, 13b, 13c, 13d, 13e, 13f, 13g, 13h: Anschlagselement
- 14a, 14b, 14c, 14d, 14e, 14f, 14g, 14h: Befestigungsabschnitt
- 15: Basisabschnitt
- 16: Basisbefestigungsabschnitt
- 17a, 17b: Klemmbefestigungsabschnitt
- 18a, 18b, 18c, 18d, 18e, 18f, 18g, 18h: Verbindungsabschnitt

## Patentansprüche

1. Trägersystem (1) zur Anordnung einer Photovoltaikeinheit (2), wobei das Trägersystem (1) mindestens zwei Photovoltaikmodule (3, 3a, 3b, 3c, 3d) und mindestens zwei Trägerelemente (4, 4a, 4b,4c, 4d, 4e, 4f) umfasst, die beabstandet zueinander angeordnet sind und kraftschlüssig und/oder formschlüssig mit einer Bodenoberfläche (5) verbunden sind, wobei die Trägerelemente jeweils ein Lagerelement (7, 7a, 7b, 7c, 7d, 7e, 7f, 7g, 7h, 7i) zur Lagerung mindestens eines der Photovoltaikmodule (3, 3a, 3b, 3c, 3d) aufweisen, wobei das jeweilige Lagerelement (7, 7a, 7b, 7c, 7d, 7e, 7f, 7g, 7h, 7i) mindestens einen ersten Lagerabschnitt (9) zur Lagerung mindestens des ersten Photovoltaikmoduls (3, 3a, 3b, 3c, 3d) und/oder einen zweiten Lagerabschnitt (10) zur Lagerung mindestens eines weiteren Photovoltaikmoduls (3, 3a, 3b, 3c, 3d) aufweist, wobei der erste Lagerabschnitt (9) und/oder der zweite Lagerabschnitt (10) jeweils mindestens ein Anschlagselement (13a, 13b, 13c, 13d, 13e, 13f, 13g, 13h) und jeweils mindestens einen Befestigungsabschnitt (14a, 14b, 14c, 14d, 14e, 14f, 14g, 14h) umfassen, wobei mindestens ein Adapterelement (8, 8a, 8b, 8c, 8d, 8e, 8f, 8g, 8h) vorgesehen ist, welches mit dem jeweiligen Befestigungsabschnitt (14a, 14b, 14c, 14d, 14e, 14f, 14g, 14h) verbunden ist, wobei das jeweilige Photovoltaikmodul (3, 3a, 3b, 3c, 3d), insbesondere ein Rahmenabschnitt (12a, 12b) des jeweiligen Photovoltaikmoduls (3, 3a, 3b, 3c, 3d) zwischen mindestens einem Anschlagselement (13a, 13b, 13c, 13d, 13e, 13f, 13g, 13h) und mindestens einem Adapterelement (8, 8a, 8b, 8c, 8d, 8e, 8f, 8g, 8h) angeordnet ist, wobei das jeweilige Lagerelement (7, 7a, 7b, 7c, 7d, 7e, 7f, 7g, 7h, 7i) einen Basisabschnitt (15) aufweist, der an dem ersten Lagerabschnitt (9) und/oder zweiten Lagerabschnitt (10) angrenzt, wobei der Basisabschnitt (15) einen Basisbefestigungsabschnitt (16) aufweist, welcher zur Anordnung des Trägerelements (4, 4a, 4b,4c, 4d, 4e, 4f) ausgebildet ist, **dadurch gekennzeichnet, dass** das Adapterelement (8, 8a, 8b, 8c, 8d, 8e, 8f, 8g, 8h) eine Höhe h von 2mm bis 30mm aufweist.

2. Trägersystem (1) nach Anspruch 1, **dadurch gekennzeichnet, dass** das Adapterelement (8, 8a, 8b, 8c, 8d, 8e, 8f, 8g, 8h) genau einen oder mindestens zwei Verbindungsabschnitte (18a, 18b, 18c, 18d, 18e, 18f, 18g, 18h) aufweist, die kraftschlüssig und/oder formschlüssig und/oder stoffschlüssig jeweils mit mindestens einem Befestigungsabschnitt (14a, 14b, 14c, 14d, 14e, 14f, 14g, 14h) des Lagerelements (7, 7a, 7b, 7c, 7d, 7e, 7f, 7g, 7h, 7i) verbunden ist/sind.

3. Trägersystem nach Anspruch 2 **dadurch gekennzeichnet, dass** das Adapterelement (8, 8a, 8b, 8c, 8d, 8e, 8f, 8g, 8h) mindestens zwei, vorzugsweise drei, Verbindungsabschnitte (18a, 18b, 18c, 18d, 18e, 18f, 18g, 18h) umfasst, wobei mindestens ein Verbindungsabschnitt (18a, 18b, 18c, 18d, 18e, 18f, 18g, 18h) mit einem Befestigungsabschnitt (14a, 14b, 14c, 14d, 14e, 14f, 14g, 14h) verbunden ist und mindestens ein anderer Verbindungsabschnitt (18a, 18b, 18c, 18d, 18e, 18f, 18g, 18h) unbesetzt ist.

4. Trägersystem (1) nach Anspruch 2 oder 3, **dadurch gekennzeichnet, dass** der jeweilige Befestigungsabschnitt (14a, 14b, 14c, 14d, 14e, 14f, 14g, 14h) als Befestigungsrastelement oder Befestigungsgegenrastelement ausgebildet ist und/oder der jeweilige Verbindungsabschnitt (18a, 18b, 18c, 18d, 18e, 18f, 18g, 18h) als Verbindungsrastelement oder Verbindungsgegenrastelement ausgebildet ist, wobei das Befestigungsrastelement mit dem Verbindungsgegenrastelement und/oder das Befestigungsgegenrastelement mit dem Verbindungsrastelement kraftschlüssig und/oder formschlüssig im Eingriff ist.

5. Trägersystem (1) nach mindestens einem der Ansprüche 2 bis 4, **dadurch gekennzeichnet, dass** der Verbindungsabschnitt (18a, 18b, 18c, 18d, 18e, 18f, 18g, 18h) des jeweiligen Adapterelements (8, 8a, 8b, 8c, 8d, 8e, 8f, 8g, 8h) als Loch oder Ausnehmung ausgebildet ist und der jeweilige Befestigungsabschnitt (14a, 14b, 14c, 14d, 14e, 14f, 14g, 14h) des Lagerelements (7, 7a, 7b, 7c, 7d, 7e, 7f, 7g, 7h, 7i) als Vorsprung ausgebildet ist, wobei zur Befestigung des Adapterelements (8, 8a, 8b, 8c, 8d, 8e, 8f, 8g, 8h) mit dem Lagerelement (7, 7a, 7b, 7c, 7d, 7e, 7f, 7g, 7h, 7i) der Vorsprung innerhalb des Lochs oder der Ausnehmung angeordnet ist.

6. Trägersystem (1) nach mindestens einem der Ansprüche 1 bis 5, **dadurch gekennzeichnet, dass** das Adapterelement (8, 8a, 8b, 8c, 8d, 8e, 8f, 8g, 8h) eine als Verbindungsabschnitt (18a, 18b, 18c, 18d, 18e, 18f, 18g, 18h) ausgebildete Nase aufweist, welche mit einem als Befestigungsabschnitt (14a, 14b, 14c, 14d, 14e, 14f, 14g, 14h) ausgebildeten Lagerloch kraftschlüssig und/oder formschlüssig verbunden ist.

7. Trägersystem (1) nach mindestens einem der Ansprüche 1 bis 6, **dadurch gekennzeichnet, dass** das Adapterelement (8, 8a, 8b, 8c, 8d, 8e, 8f, 8g, 8h) als Arretierungselement für mindestens ein Photovoltaikmodul (3, 3a, 3b, 3c, 3d) ausgebildet ist, wobei das Adapterelement (8, 8a, 8b, 8c, 8d, 8e, 8f, 8g, 8h) zur Befestigung des mindestens einen Photovoltaikmoduls (3, 3a, 3b, 3c, 3d) bewegbar, insbesondere verdrehbar auf dem Lagerelement (7, 7a, 7b, 7c, 7d, 7e, 7f, 7g, 7h, 7i), insbesondere auf dem Befestigungsabschnitt (14a, 14b, 14c, 14d, 14e, 14f, 14g, 14h) ausgebildet ist.

8. Trägersystem (1) nach mindestens einem der Ansprüche 1 bis 7, **dadurch gekennzeichnet, dass** das Adapterelement (8, 8a, 8b, 8c, 8d, 8e, 8f, 8g, 8h) als vorzugsweise quaderförmige Platte ausgebildet ist oder vorzugsweise als kreisförmige oder rundförmige Scheibe ausgebildet ist.

9. Trägersystem (1) nach mindestens einem der Ansprüche 1 bis 8, **dadurch gekennzeichnet, dass** das jeweilige Anschlagselement (13a, 13b, 13c, 13d, 13e, 13f, 13g, 13h) als Haltenase ausgebildet ist, welche aus dem jeweiligen Lagerabschnitt (9, 10) des Lagerelements (7, 7a, 7b, 7c, 7d, 7e, 7f, 7g, 7h, 7i) hervorsteht.

10. Trägersystem (1) nach mindestens einem der Ansprüche 1 bis 9, **dadurch gekennzeichnet, dass** der jeweilige Verbindungsabschnitt (18a, 18b, 18c, 18d, 18e, 18f, 18g, 18h) des Adapterelements (8, 8a, 8b, 8c, 8d, 8e, 8f, 8g, 8h) als Schlitz ausgebildet ist und auf einen Randabschnitt des Lagerelements (7, 7a, 7b, 7c, 7d, 7e, 7f, 7g, 7h, 7i) seitlich aufschiebbar ausgebildet ist, wobei nach der Montage des Adapterelements (8, 8a, 8b, 8c, 8d, 8e, 8f, 8g, 8h) mit dem Lagerelement (7, 7a, 7b, 7c, 7d, 7e, 7f, 7g, 7h, 7i) der Schlitz kraftschlüssig und/oder formschlüssig mit dem Randabschnitt im Eingriff ist.

11. Trägersystem (1) nach mindestens einem der Ansprüche 1 bis 10, **dadurch gekennzeichnet, dass** das jeweilige Trägerelement (4, 4a, 4b,4c, 4d, 4e, 4f) mit mindestens einem Bodenoberflächenbefestigungselement (6, 6a, 6b, 6c, 6d, 6e) verbunden ist, wobei das Bodenoberflächenbefestigungselement (6, 6a, 6b, 6c, 6d, 6e) mit der zur Anordnung des Trägersystems (1) vorgesehenen Bodenoberfläche (5) kraftschlüssig und/oder formschlüssig verbunden ist.

12. Trägersystem (1) nach mindestens einem der Ansprüche 1 bis 11, **dadurch gekennzeichnet, dass** das Trägersystem (1) mindestens ein erstes und ein zweites Trägerelement (4, 4a, 4b,4c, 4d, 4e, 4f) umfasst, wobei der Abstand des Lagerelements (7, 7a, 7b, 7c, 7d, 7e, 7f, 7g, 7h, 7i) des ersten Trägerelements (4, 4a, 4b,4c, 4d, 4e, 4f) zu der Bodenoberfläche (5) länger ausgebildet ist, als der Abstand des Lagerelements (7, 7a, 7b, 7c, 7d, 7e, 7f, 7g, 7h, 7i) des zweiten Trägerelements (4, 4a, 4b,4c, 4d, 4e, 4f) zu der Bodenoberfläche (5), wobei der erste Lagerabschnitt (9) und der zweite Lagerabschnitt (10) des Lagerelements (7, 7a, 7b, 7c, 7d, 7e, 7f, 7g, 7h, 7i) des ersten Trägerelements (4, 4a, 4b,4c, 4d, 4e, 4f) in einem Winkel alpha1 von größer oder gleich 180 Grad zueinander angeordnet sind und der erste Lagerabschnitt (9) und der zweite Lagerabschnitt (10) des Lagerelements (7, 7a, 7b, 7c, 7d, 7e, 7f, 7g, 7h, 7i) des zweiten Trägerelements (4, 4a, 4b,4c, 4d, 4e, 4f) in einem Winkel alpha2 von kleiner gleich 180 Grad zueinander angeordnet sind.

13. Trägersystem (1) nach mindestens einem der Ansprüche 2 bis 12, **dadurch gekennzeichnet, dass** mindestens ein Adapterelement (8, 8a, 8b, 8c, 8d, 8e, 8f, 8g, 8h) mindestens zwei Verbindungsabschnitte (18a, 18b, 18c, 18d, 18e, 18f, 18g, 18h) umfasst, wobei mindestens der erste Verbindungsabschnitt (18a, 18b, 18c, 18d, 18e, 18f, 18g, 18h) mit dem ersten Befestigungsabschnitt (14a, 14b, 14c, 14d, 14e, 14f, 14g, 14h) des jeweiligen Lagerelements (7, 7a, 7b, 7c, 7d, 7e, 7f, 7g, 7h, 7i), insbesondere ersten Lagerabschnitts (9) oder zweiten Lagerabschnitts (10) und mindestens der zweite Verbindungsabschnitt (18a, 18b, 18c, 18d, 18e, 18f, 18g, 18h) mit dem zweiten Befestigungsabschnitt (14a, 14b, 14c, 14d, 14e, 14f, 14g, 14h) desselben Lagerelements (7, 7a, 7b, 7c, 7d, 7e, 7f, 7g, 7h, 7i), insbesondere desselben ersten Lagerabschnitts (9) oder desselben zweiten Lagerabschnitts (10) verbunden ist.

14. Trägersystem (1) nach mindestens einem der Ansprüche 1 bis 13, **dadurch gekennzeichnet, dass** auf dem ersten Lagerabschnitt (9) und dem zweiten Lagerabschnitt (10) jeweils ein Klemmbefestigungsabschnitt (17a, 17b) zur Anordnung eines Klemmelements vorgesehen ist, welches jeweils mindestens zwei Photovoltaikmodule (3, 3a, 3b, 3c, 3d) kraftschlüssig und/oder formschlüssig und/oder stoffschlüssig miteinander verbindet.

15. Trägersystem (1) nach mindestens einem der Ansprüche 1 bis 14, **dadurch gekennzeichnet, dass** das Adapterelement (8, 8a, 8b, 8c, 8d, 8e, 8f, 8g, 8h) aus Kunststoff oder aus Metall, insbesondere aus Edelstahl oder galvanisierten Stahl oder aus feuerverzinkten Stahl ausgebildet ist.

16. Trägersystem (1) nach mindestens einem der Ansprüche 1 bis 15 **dadurch gekennzeichnet, dass** die für das Trägersystem (1) vorgesehenen Adapterelemente (8, 8a, 8b, 8c, 8d, 8e, 8f, 8g, 8h) unterschiedlich groß ausgebildet sind und eine unterschiedliche Form aufweisen.

17. Trägersystem (1) nach mindestens einem der Ansprüche 1 bis 16 **dadurch gekennzeichnet, dass** das jeweilige Photovoltaikmodul (3, 3a, 3b, 3c, 3d), insbesondere der Rahmenabschnitt (12a, 12b) des jeweiligen Photovoltaikmoduls (3, 3a, 3b, 3c, 3d) kraftschlüssig und/oder formschlüssig und/oder stoffschlüssig zwischen mindestens einem Anschlagselement (13a, 13b, 13c, 13d, 13e, 13f, 13g, 13h) und mindestens einem Adapterelement (8, 8a, 8b, 8c, 8d, 8e, 8f, 8g, 8h) angeordnet ist.

18. Trägersystem (1) nach mindestens einem der Ansprüche 1 bis 17 **dadurch gekennzeichnet, dass** zwischen dem Photovoltaikmodul (3, 3a, 3b, 3c, 3d), insbesondere dem Rahmenabschnitt (12a, 12b) und dem Befestigungsabschnitt (14a, 14b, 14c, 14d, 14e, 14f, 14g, 14h) und/oder dem Photovoltaikmodul (3, 3a, 3b, 3c, 3d), insbesondere dem Rahmenabschnitt (12a, 12b) und dem Anschlagselement (13a, 13b, 13c, 13d) und/oder dem Photovoltaikmodul (3, 3a, 3b, 3c, 3d), insbesondere dem Rahmenabschnitt (12a, 12b) und/oder dem Adapterelement (8, 8a, 8b, 8c, 8d, 8e, 8f, 8g, 8h) ein Spiel angeordnet ist.

## Claims

1. Support system (1) for arranging a photovoltaic unit (2), wherein the support system (1) comprises at least two photovoltaic modules (3, 3a, 3b, 3c, 3d) and at least two support elements (4, 4a, 4b, 4c, 4d, 4e, 4f), which are arranged at a distance from one another and are connected to a ground surface (5) in a force-fit and/or form-fit manner, wherein the respective support elements have a bearing element (7, 7a, 7b, 7c, 7d, 7e, 7f, 7g, 7h, 7i) for bearing at least one of the photovoltaic modules (3, 3a, 3b, 3c, 3d), wherein the respective bearing element (7, 7a, 7b, 7c, 7d, 7e, 7f, 7g, 7h, 7i) has at least a first bearing portion (9) for bearing at least the first photovoltaic module (3, 3a, 3b, 3c, 3d) and/or a second bearing portion (10) for bearing at least one further photovoltaic module (3, 3a, 3b, 3c, 3d), wherein the first bearing section (9) and/or the second bearing section (10) each have at least one stop element (13a, 13b, 13c, 13d, 13e, 13f, 13g, 13h) and at least one attaching portion (14a, 14b, 14c, 14d, 14e, 14f, 14g, 14h), wherein at least one adapter element (8, 8a, 8b, 8c, 8d, 8e, 8f, 8g, 8h) is provided, which is connected to the respective attaching portion (14a, 14b, 14c, 14d, 14e, 14f, 14g, 14h), wherein the respective photovoltaic module (3, 3a, 3b, 3c, 3d), in particular a frame portion (12a, 12b) of the respective photovoltaic module (3, 3a, 3b, 3c, 3d) is arranged between at least one stop element (13a, 13b, 13c, 13d, 13e, 13f, 13g, 13h) and at least one adapter element (8, 8a, 8b, 8c, 8d, 8e, 8f, 8g, 8h), wherein the respective bearing element (7, 7a, 7b, 7c, 7d, 7e, 7f, 7g, 7h, 7i) has a base portion (15) which is adjacent the first bearing portion (9) and/or second bearing portion (10), wherein the base portion (15) has a base attaching portion (16) which is designed for the arrangement of the support element (4, 4a, 4b, 4c, 4d, 4e, 4f), **characterised in that** the adapter element (8, 8a, 8b, 8c, 8d, 8e, 8f, 8g, 8h) has a height h of 2 mm to 30 mm.

2. Support system (1) according to claim 1, **characterised in that** the adapter element (8, 8a, 8b, 8c, 8d, 8e, 8f, 8g, 8h) has exactly one or at least two connecting portions (18a, 18b, 18c, 18d, 18e, 18f, 18g, 18h), which is/are each connected in a force-fit and/or form-fit and/or material-fit manner to at least one attaching portion (14a, 14b, 14c, 14d, 14e, 14f, 14g, 14h) of the bearing element (7, 7a, 7b, 7c, 7d, 7e, 7f, 7g, 7h, 7i).

3. Support system according to claim 2, **characterised in that** the adapter element (8, 8a, 8b, 8c, 8d, 8e, 8f, 8g, 8h) comprises at least two, preferably three, connecting portions (18a, 18b, 18c, 18d, 18e, 18f, 18g, 18h), wherein at least one connecting portion (18a, 18b, 18c, 18d, 18e, 18f, 18g, 18h) is connected to a attaching portion (14a, 14b, 14c, 14d, 14e, 14f, 14g, 14h) and at least one other connecting portion (18a, 18b, 18c, 18d, 18e, 18f, 18g, 18h) is unoccupied.

4. Support system (1) according to claim 2 or 3, **characterised in that** the respective attaching portion (14a, 14b, 14c, 14d, 14e, 14f, 14g, 14h) is designed as an attaching latching element or attaching counter-latching element and/or the respective connecting portion (18a, 18b, 18c, 18d, 18e, 18f, 18g, 18h) is designed as a connecting latching element or connecting counter-latching element, wherein the attaching latching element engages with the connecting counter-latching element and/or the attaching counter-latching element engages with the connecting latching element in a force-fit and/or form-fit manner.

5. Support system (1) according to at least one of claims 2 to 4, **characterised in that** the connecting portion (18a, 18b, 18c, 18d, 18e, 18f, 18g, 18h) of the respective adapter element (8, 8a, 8b, 8c, 8d, 8e, 8f, 8g, 8h) is designed as a hole or recess and the respective attaching portion (14a, 14b, 14c, 14d, 14e, 14f, 14g, 14h) of the bearing element (7, 7a, 7b, 7c, 7d, 7e, 7f, 7g, 7h, 7i) is formed as a projection, wherein for attaching the adapter element (8, 8a, 8b, 8c, 8d, 8e, 8f, 8g, 8h) with the bearing element (7, 7a, 7b, 7c, 7d, 7e, 7f, 7g, 7h, 7i), the projection is arranged inside the hole or the recess.

6. Support system (1) according to at least one of claims 1 to 5, **characterised in that** the adapter element (8, 8a, 8b, 8c, 8d, 8e, 8f, 8g, 8h) has a nose formed as a connecting portion (18a, 18b, 18c, 18d, 18e, 18f, 18g, 18h), which is connected in a force-fit and/or form-fit manner to a bearing hole formed as a attaching portion (14a, 14b, 14c, 14d, 14e, 14f, 14g, 14h).

7. Support system (1) according to at least one of claims 1 to 6, **characterised in that** the adapter element (8, 8a, 8b, 8c, 8d, 8e, 8f, 8g, 8h) for attaching the at least one photovoltaic module (3, 3a, 3b, 3c, 3d) is designed as a locking element for at least one photovoltaic module (3, 3a, 3b, 3c, 3d), wherein the adapter element (8, 8a, 8b, 8c, 8d, 8e, 8f, 8g, 8h) is designed to be movable, in particular rotatable, on the bearing element (7, 7a, 7b, 7c, 7d, 7e, 7f, 7g, 7h, 7i), in particular on the attaching portion (14a, 14b, 14c, 14d, 14e, 14f, 14g, 14h),.

8. Support system (1) according to at least one of claims 1 to 7, **characterised in that** the adapter element (8, 8a, 8b, 8c, 8d, 8e, 8f, 8g, 8h) is designed as a preferably cuboidal plate or is preferably designed as a circular or round disc.

9. Support system (1) according to at least one of claims 1 to 8, **characterised in that** the respective stop element (13a, 13b, 13c, 13d, 13e, 13f, 13g, 13h) is designed as a retaining nose, which protrudes from the respective bearing portion (9, 10) of the bearing element (7, 7a, 7b, 7c, 7d, 7e, 7f, 7g, 7h, 7i).

10. Support system (1) according to at least one of claims 1 to 9, **characterised in that** the respective connecting portion (18a, 18b, 18c, 18d, 18e, 18f, 18g, 18h) of the adapter element (8, 8a, 8b, 8c, 8d, 8e, 8f, 8g, 8h) is designed as a slot and is designed to slide laterally onto an edge section of the bearing element (7, 7a, 7b, 7c, 7d, 7e, 7f, 7g, 7h, 7i), wherein after mounting the adapter element (8, 8a, 8b, 8c, 8d, 8e, 8f, 8g, 8h) with the bearing element (7, 7a, 7b, 7c, 7d, 7e, 7f, 7g, 7h, 7i), the slot is in an engagement with the edge portion in a force-fit and/or form-fit manner.

11. Support system (1) according to at least one of claims 1 to 10, **characterised in that** the respective support element (4, 4a, 4b, 4c, 4d, 4e, 4f) is connected to at least one ground surface attaching element (6, 6a, 6b, 6c, 6d, 6e), wherein the ground surface attaching element (6, 6a, 6b, 6c, 6d, 6e) is connected to the ground surface (5) provided for the arrangement of the support system (1) in a force-fit and/or form-fit manner.

12. Support system (1) according to at least one of claims 1 to 11, **characterised in that** the support system (1) comprises at least a first and a second support element (4, 4a, 4b, 4c, 4d, 4e, 4f), wherein the distance of the bearing element (7, 7a, 7b, 7c, 7d, 7e, 7f, 7g, 7h, 7i) of the first support element (4, 4a, 4b, 4c, 4d, 4e, 4f) to the ground surface (5) is longer than the distance of the bearing element (7, 7a, 7b, 7c, 7d, 7e, 7f, 7g, 7h, 7i) of the second support element (4, 4a, 4b, 4c, 4d, 4e, 4f) to the ground surface (5), wherein the first bearing portion (9) and the second bearing portion (10) of the bearing element (7, 7a, 7b, 7c, 7d, 7e, 7f, 7g, 7h, 7i) of the first support element (4, 4a, 4b, 4c, 4d, 4e, 4f) are arranged at an angle alpha1 of greater than or equal to 180 degrees to one another and the first bearing portion (9) and the second bearing portion (10) of the bearing element (7, 7a, 7b, 7c, 7d, 7e, 7f, 7g, 7h, 7i) of the second support element (4, 4a, 4b, 4c, 4d, 4e, 4f) are arranged at an angle alpha2 of less than or equal to 180 degrees to one another.

13. Support system (1) according to at least one of claims 2 to 12, **characterised in that** at least one adapter element (8, 8a, 8b, 8c, 8d, 8e, 8f, 8g, 8h) comprises at least two connecting portions (18a, 18b, 18c, 18d, 18e, 18f, 18g, 18h), wherein at least the first connecting portion (18a, 18b, 18c, 18d, 18e, 18f, 18g, 18h) is connected to the first attaching portion (14a, 14b, 14c, 14d, 14e, 14f, 14g, 14h ) of the respective bearing element (7, 7a, 7b, 7c, 7d, 7e, 7f, 7g, 7h, 7i), in particular the first bearing portion (9) or second bearing portion (10) and at least the second connecting portion (18a, 18b, 18c, 18d, 18e, 18f, 18g, 18h) is connected with the second attaching portion (14a, 14b, 14c, 14d, 14e, 14f, 14g, 14h) of the same bearing element (7, 7a, 7b, 7c, 7d, 7e, 7f, 7g, 7h, 7i), in particular of the same first bearing portion (9) or the same second bearing portion (10).

14. Support system (1) according to at least one of claims 1 to 13, **characterised in that** a clamping attaching portion (17a, 17b) is provided on each of the first bearing portion (9) and the second bearing portion (10) for the arrangement of a clamping element which connects at least two photovoltaic modules (3, 3a, 3b, 3c, 3d) to each other in a force-fit and/or form-fit and/or material-fit manner.

15. Support system (1) according to at least one of claims 1 to 14, **characterised in that** the adapter element (8, 8a, 8b, 8c, 8d, 8e, 8f, 8g, 8h) is made of plastic or of metal, in particular of stainless steel or galvanised steel or of hot-galvanised steel.

16. Support system (1) according to at least one of claims 1 to 15, **characterised in that characterised in that** the adapter elements (8, 8a, 8b, 8c, 8d, 8e, 8f, 8g, 8h) provided for the support system (1) are of different sizes and have a different shape.

17. Support system (1) according to at least one of claims 1 to 16, **characterised in that characterised in that** the respective photovoltaic module (3, 3a, 3b, 3c, 3d), in particular the frame portion (12a, 12b) of the respective photovoltaic module (3, 3a, 3b, 3c, 3d) is arranged in a force-fit and/or form-fit and/or material-fit manner between at least one stop element (13a, 13b, 13c, 13d, 13e, 13f, 13g, 13h) and at least one adapter element (8, 8a, 8b, 8c, 8d, 8e, 8f, 8g, 8h).

18. Support system (1) according to at least one of claims 1 to 17, **characterised in that characterised in that** a clearance is arranged between the photovoltaic module (3, 3a, 3b, 3c, 3d), in particular the frame portion (12a, 12b) and the attaching portion (14a, 14b, 14c, 14d, 14e, 14f, 14g, 14h) and/or the photovoltaic module (3, 3a, 3b, 3c, 3d), in particular the frame portion (12a, 12b) and the stop element (13a, 13b, 13c, 13d) and/or the photovoltaic module (3, 3a, 3b, 3c, 3d), in particular the frame portion (12a, 12b) and/or the adapter element (8, 8a, 8b, 8c, 8d, 8e, 8f, 8g, 8h).

## Revendications

1. Système de support (1) pour disposer une unité photovoltaïque (2), le système de support (1) comprenant au moins deux modules photovoltaïques (3, 3a, 3b, 3c, 3d) et au moins deux éléments de support (4, 4a, 4b, 4c, 4d, 4e, 4f), qui sont disposés à distance l'un de l'autre et sont reliés par adhérence et/ou par complémentarité de forme à une surface de sol (5), les éléments de support ayant chacun un élément de palier (7, 7a, 7b, 7c, 7d, 7e, 7f, 7g, 7h, 7i) pour le palier d'au moins un des modules photovoltaïques (3, 3a, 3b, 3c, 3d), l'élément de palier respectif (7, 7a, 7b, 7c, 7d, 7e, 7f, 7g, 7h, 7i) ayant au moins une première section de palier (9) pour le palier d'au moins le premier module photovoltaïque (3, 3a, 3b, 3c, 3d) et/ou une deuxième section de palier (10) pour le palier d'au moins un autre module photovoltaïque (3, 3a, 3b, 3c, 3d), la première section de palier (9) et/ou la deuxième section de palier (10) comprenant chacune au moins un élément de butée (13a, 13b, 13c, 13d, 13e, 13f, 13g, 13h) et chacune au moins une section de fixation (14a, 14b, 14c, 14d, 14e, 14f, 14g, 14h), au moins un élément adaptateur (8, 8a, 8b, 8c, 8d, 8e, 8f, 8g, 8h) est prévu, lequel est relié à la section de fixation respective (14a, 14b, 14c, 14d, 14e, 14f, 14g, 14h), le module photovoltaïque respectif (3, 3a, 3b, 3c, 3d), en particulier une section de cadre (12a, 12b) du module photovoltaïque respectif (3, 3a, 3b, 3c, 3d) étant arrangé entre au moins un élément de butée (13a, 13b, 13c, 13d, 13e, 13f, 13g, 13h) et au moins un élément adaptateur (8, 8a, 8b, 8c, 8d, 8e, 8f, 8g, 8h), l'élément de palier respectif (7, 7a, 7b, 7c, 7d, 7e, 7f, 7g, 7h, 7i) ayant une section de base (15) qui est adjacente à la première section de palier (9) et/ou à la deuxième section de palier (10), dans lequel la section de base (15) ayant une section de fixation de base (16) qui est conformée pour placer l'élément de support (4, 4a, 4b, 4c, 4d, 4e, 4f), **caractérisé en ce que** l'élément adaptateur (8, 8a, 8b, 8c, 8d, 8e, 8f, 8g, 8h) a une hauteur h de 2 mm à 30 mm.

2. Système de support (1) selon la revendication 1, **caractérisé en ce que** l'élément adaptateur (8, 8a, 8b, 8c, 8d, 8e, 8f, 8g, 8h) a exactement une ou au moins deux sections de liaison (18a, 18b, 18c, 18d, 18e, 18f, 18g, 18h), qui est/sont reliée(s) par adhérence et/ou par complémentarité de forme et/ou par engagement de matière respectivement à au moins une section de fixation (14a, 14b, 14c, 14d, 14e, 14f, 14g, 14h) de l'élément de palier (7, 7a, 7b, 7c, 7d, 7e, 7f, 7g, 7h, 7i).

3. Système de support selon la revendication 2, **caractérisé en ce que** l'élément adaptateur (8, 8a, 8b, 8c, 8d, 8e, 8f, 8g, 8h) comprend au moins deux, de préférence trois, sections de connexion (18a, 18b, 18c, 18d, 18e, 18f, 18g, 18h), au moins une section de connexion (18a, 18b, 18c, 18d, 18e, 18f, 18g, 18h) est reliée à une section de fixation (14a, 14b, 14c, 14d, 14e, 14f, 14g, 14h) et au moins une autre section de liaison (18a, 18b, 18c, 18d, 18e, 18f, 18g, 18h) est inoccupée.

4. Système de support (1) selon la revendication 2 ou 3, **caractérisé en ce que** la section de fixation respective (14a, 14b, 14c, 14d, 14e, 14f, 14g, 14h) est conformée en élément d'enclenchement de fixation ou en contre-élément d'enclenchement de fixation et/ou la section de connexion respective (18a, 18b, 18c, 18d, 18e, 18f, 18g, 18h) est conformée en élément d'enclenchement de connexion ou en contre-élément d'enclenchement de connexion, l'élément d'enclenchement de fixation étant en prise avec le contre-élément d'enclenchement de connexion et/ou le contre-élément d'enclenchement de fixation étant en prise avec l'élément d'enclenchement de connexion par adhérence et/ou par complémentarité de formes..

5. Système de support (1) selon au moins l'une des revendications 2 à 4, **caractérisé en ce que** la section de connexion (18a, 18b, 18c, 18d, 18e, 18f, 18g, 18h) de l'élément adaptateur respectif (8, 8a, 8b, 8c, 8d, 8e, 8f, 8g, 8h) est conformée en trou ou en exclusion et la section de fixation respective (14a, 14b, 14c, 14d, 14e, 14f, 14g, 14h) de l'élément de palier (7, 7a, 7b, 7c, 7d, 7e, 7f, 7g, 7h, 7i) est conformée en saillie, la fixation de l'élément adaptateur (8, 8a, 8b, 8c, 8d, 8e, 8f, 8g, 8h) avec l'élément de palier (7, 7a, 7b, 7c, 7d, 7e, 7f, 7g, 7h, 7i), la saillie est arrangée à l'intérieur du trou ou de l'exclusion.

6. Système de support (1) selon au moins l'une des revendications 1 à 5, **caractérisé en ce que** l'élément adaptateur (8, 8a, 8b, 8c, 8d, 8e, 8f, 8g, 8h) a un nez conformé en section de connexion (18a, 18b, 18c, 18d, 18e, 18f, 18g, 18h), qui est relié par adhérence et/ou par complémentarité de forme à un trou de palier conformé en section de fixation (14a, 14b, 14c, 14d, 14e, 14f, 14g, 14h).

7. Système de support (1) selon au moins l'une des revendications 1 à 6, **caractérisé en ce que** l'élément adaptateur (8, 8a, 8b, 8c, 8d, 8e, 8f, 8g, 8h) est conformé en élément d'arrêt pour au moins un module photovoltaïque (3, 3a, 3b, 3c, 3d l'élément adaptateur (8, 8a, 8b, 8c, 8d, 8e, 8f, 8g, 8h) est conformé de manière mobile, en particulier de manière à pouvoir tourner sur l'élément de support (7, 7a, 7b, 7c, 7d, 7e, 7f, 7g, 7h, 7i), en particulier sur la section de fixation (14a, 14b, 14c, 14d, 14e, 14f, 14g, 14h), pour la fixation du au moins un module photovoltaïque (3, 3a, 3b, 3c, 3d).

8. Système de support (1) selon au moins l'une des revendications 1 à 7, **caractérisé en ce que** l'élément adaptateur (8, 8a, 8b, 8c, 8d, 8e, 8f, 8g, 8h) est réalisé sous la forme d'une plaque, de préférence parallélépipédique, ou est conformé de préférence sous la forme d'un disque circulaire ou rond.

9. Système de support (1) selon au moins l'une des revendications 1 à 8, **caractérisé en ce que** l'élément de butée respectif (13a, 13b, 13c, 13d, 13e, 13f, 13g, 13h) est conformé sous la forme d'un nez de retenue qui dépasse de la section de palier respective (9, 10) de l'élément de palier (7, 7a, 7b, 7c, 7d, 7e, 7f, 7g, 7h, 7i).

10. Système de support (1) selon au moins l'une des revendications 1 à 9, **caractérisé en ce que** la section de connexion respective (18a, 18b, 18c, 18d, 18e, 18f, 18g, 18h) de l'élément adaptateur (8, 8a, 8b, 8c, 8d, 8e, 8f, 8g, 8h) est conformée en fente et est conformée de manière à pouvoir être enfilée latéralement sur une section de bord de l'élément de palier (7, 7a, 7b, 7c, 7d, 7e, 7f, 7g, 7h, 7i), la fente étant en prise avec la section de bord par adhérence et/ou par complémentarité de forme après le montage de l'élément adaptateur (8, 8a, 8b, 8c, 8d, 8e, 8f, 8g, 8h) avec l'élément de palier (7, 7a, 7b, 7c, 7d, 7e, 7f, 7g, 7h, 7i).

11. Système de support (1) selon au moins l'une des revendications 1 à 10, **caractérisé en ce que** l'élément de support respectif (4, 4a, 4b, 4c, 4d, 4e, 4f) est relié à au moins un élément de fixation de surface de sol (6, 6a, 6b, 6c, 6d, 6e), l'élément de fixation de la surface du sol (6, 6a, 6b, 6c, 6d, 6e) étant relié par adhérence et/ou par complémentarité de forme à la surface du sol (5) prévue pour arranger le système de support (1).

12. Système de support (1) selon au moins l'une des revendications 1 à 11, **caractérisé en ce que** le système de support (1) comprend au moins un premier et un deuxième élément de support (4, 4a, 4b, 4c, 4d, 4e, 4f), la distance de l'élément de palier (7, 7a, 7b, 7c, 7d, 7e, 7f, 7g, 7h, 7i) du premier élément de support (4, 4a, 4b, 4c, 4d, 4e, 4f) à la surface du sol (5) est plus longue que la distance de l'élément de palier (7, 7a, 7b, 7c, 7d, 7e, 7f, 7g, 7h, 7i) du deuxième élément de support (4, 4a, 4b, 4c, 4d, 4e, 4f) à la surface du sol (5), dans lequel la première section de palier (9) et la deuxième section de palier (10) de l'élément de palier (7, 7a, 7b, 7c, 7d, 7e, 7f, 7g, 7h, 7i) du premier élément de support (4, 4a, 4b, 4c, 4d, 4e, 4f) sont disposées l'une par rapport à l'autre selon un angle alpha1 supérieur ou égal à 180 degrés et la première section de palier (9) et la deuxième section de palier (10) de l'élément de palier (7, 7a, 7b, 7c, 7d, 7e, 7f, 7g, 7h, 7i) du deuxième élément de support (4, 4a, 4b, 4c, 4d, 4e, 4f) sont disposées l'une par rapport à l'autre selon un angle alpha2 inférieur ou égal à 180 degrés.

13. Système de support (1) selon au moins l'une des revendications 2 à 12, **caractérisé en ce qu'**au moins un élément adaptateur (8, 8a, 8b, 8c, 8d, 8e, 8f, 8g, 8h) comprend au moins deux sections de connexion (18a, 18b, 18c, 18d, 18e, 18f, 18g, 18h), au moins la première section de connexion (18a, 18b, 18c, 18d, 18e, 18f, 18g, 18h) étant reliée à la première section de fixation (14a, 14b, 14c, 14d, 14e, 14f, 14g, 14h) de l'élément de palier respectif (7, 7a, 7b, 7c, 7d, 7e, 7f, 7g, 7h, 7i), en particulier la première section de palier (9) ou la deuxième section de palier (10) et au moins la deuxième section de liaison (18a, 18b, 18c, 18d, 18e, 18f, 18g, 18h) avec la deuxième section de fixation (14a, 14b, 14c, 14d, 14e, 14f, 14g, 14h) du même élément de palier (7, 7a, 7b, 7c, 7d, 7e, 7f, 7g, 7h, 7i), en particulier de la même première section de palier (9) ou de la même deuxième section de palier (10).

14. Système de support (1) selon au moins l'une des revendications 1 à 13, **caractérisé en ce qu'**il est prévu sur la première section de palier (9) et sur la deuxième section de palier (10) respectivement une section de fixation par serrage (17a, 17b) pour l'agencement d'un élément de serrage qui relie respectivement au moins deux modules photovoltaïques (3, 3a, 3b, 3c, 3d) par adhérence et/ou par complémentarité de forme et/ou par engagement de matière.

15. Système de support (1) selon au moins l'une des revendications 1 à 14, **caractérisé en ce que** l'élément adaptateur (8, 8a, 8b, 8c, 8d, 8e, 8f, 8g, 8h) est conformé en matière plastique ou en métal, en particulier en acier inoxydable ou galvanisé ou en acier galvanisé à chaud.

16. Système de support (1) selon au moins l'une des revendications 1 à 15, **caractérisé en ce que** les éléments d'adapteur (8, 8a, 8b, 8c, 8d, 8e, 8f, 8g, 8h) prévus pour le système de support (1) sont de tailles différentes et ont une forme différente.

17. Système de support (1) selon au moins l'une des revendications 1 à 16, **caractérisé en ce que caractérisé en ce que** le module photovoltaïque respectif (3, 3a, 3b, 3c, 3d), en particulier la section de cadre (12a, 12b) du module photovoltaïque respectif (3, 3a, 3b, 3c, 3d) est arrangée par adhérence et/ou par engagement positif et/ou par engagement de matière entre au moins un élément de butée (13a, 13b, 13c, 13d, 13e, 13f, 13g, 13h) et au moins un élément adaptateur (8, 8a, 8b, 8c, 8d, 8e, 8f, 8g, 8h).

18. Système de support (1) selon au moins l'une des revendications 1 à 17, **caractérisé en ce qu'**entre le module photovoltaïque (3, 3a, 3b, 3c, 3d), en particulier la portion de cadre (12a, 12b) et la portion de fixation (14a, 14b, 14c, 14d, 14e, 14f, 14g, 14h) et/ou le module photovoltaïque (3, 3a, 3b, 3c, 3d), en particulier la section de cadre (12a, 12b) et l'élément de butée (13a, 13b, 13c, 13d) et/ou le module photovoltaïque (3, 3a, 3b, 3c, 3d), en particulier la section de cadre (12a, 12b) et/ou l'élément adaptateur (8, 8a, 8b, 8c, 8d, 8e, 8f, 8g, 8h) est arrangé avec un cycle de service.
